# EUROPEAN PATENT APPLICATION

(11) **EP 1 780 993 A2**
(43) Date of publication of application: **02.05.2007**
(21) Application number: 06021999.5
(22) Date of filing: 20.10.2006
(51) Int. Cl.: H04M 1/247, G06F 3/048

(54) **Method and apparatus for establishing and displaying menu selection screen in portable terminal**

(30) Priority: 26.10.2005 KR 20050101413
(71) Applicant: Samsung Electronics Co., Ltd., Suwon-si, Gyeonggi-Do (KR)
(72) Inventor: Won, Jong-Sang, Yeongtong-gu Suwon-si Gyeonggi-do (KR); Choe, Gwang-Woo, Yeongtong-gu Suwon-si Gyeonggi-do (KR); Cha, Jung-Sook, Yeongtong-gu Suwon-si Gyeonggi-do (KR); Nam, Mi-Young, Yeongtong-gu Suwon-si Gyeonggi-do (KR)
(74) Representative: Lang, Johannes

(57) **Abstract**

A method and apparatus are disclosed for displaying a menu item selected by a user from a menu list that corresponds to various functions of a portable terminal, such as a wait screen image, so that the user can rapidly and easily access frequently used menus.

## Description

### BACKGROUND OF THE INVENTION

### Field of the Invention:

The present invention relates to a portable terminal. More particularly, the present invention relates to an apparatus and method for establishing and displaying a wait screen image in a portable terminal.

### Description of the Related Art:

With the increase in the number of portable terminals possessed by individuals, portable terminals have been developed to enable users to configure the terminals according to users' tastes. In particular, users can establish the portable terminal so as to enable easy access to functions that are frequently-used by setting up a hot key or the like for a given function. However, even when the user accesses a menu through a set hot key, the user must adjust the keys several times in order to display information or contents desired by the user. Moreover, although the conventional portable terminal has various functions, a wait screen image for the portable terminal is limited to an image set by the user and/or to an image of a calendar. Therefore, the user must adjust a key in a wait-screen state in order to access a menu, which causes inconvenience to the user.

### SUMMARY OF THE INVENTION

The present invention has been made to address the above-mentioned problems occurring in the prior art. Accordingly, an object of the present invention is to provide a method and apparatus for establishing a wait screen image of a portable terminal using a menu selected by the user.

To accomplish this object, in accordance with one aspect of the present invention, there is provided a method and apparatus for establishing and displaying a wait screen image in a portable terminal where menu items corresponding to various functions of the portable terminal are displayed, at least one of the displayed menu items is selected, and the wait screen image is displayed using a selected menu item and a sub-item of the selected menu item.

### BRIEF DESCRIPTION OF THE DRAWINGS

The above and other objects, exemplary features and advantages of the present invention will be more apparent from the following detailed description taken in conjunction with the accompanying drawings, in which:
FIG. 1 is a block diagram illustrating construction of a portable terminal according to an exemplary embodiment of the present invention;
FIG. 2 is a flowchart illustrating formation of a home screen procedure according to an exemplary embodiment of the present invention;
FIG. 3 is a flowchart illustrating display of a home screen procedure according to an exemplary embodiment of the present invention; and
FIGs. 4A to 4C are views for illustrating screens displayed when formation of a home screen procedure is performed according to an exemplary embodiment of the present invention.

Throughout the drawings, like reference numbers should be understood to refer to like elements, features, and structures.

### DETAILED DESCRIPTION OF EXEMPLARY EMBODIMENTS

Hereinafter, exemplary embodiments of the present invention will be described with reference to the accompanying drawings. The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope and spirit of the claimed invention. Descriptions of well-known functions and constructions are omitted for clarity and conciseness.

In the following exemplary embodiment, a home screen comprises a wait screen image.

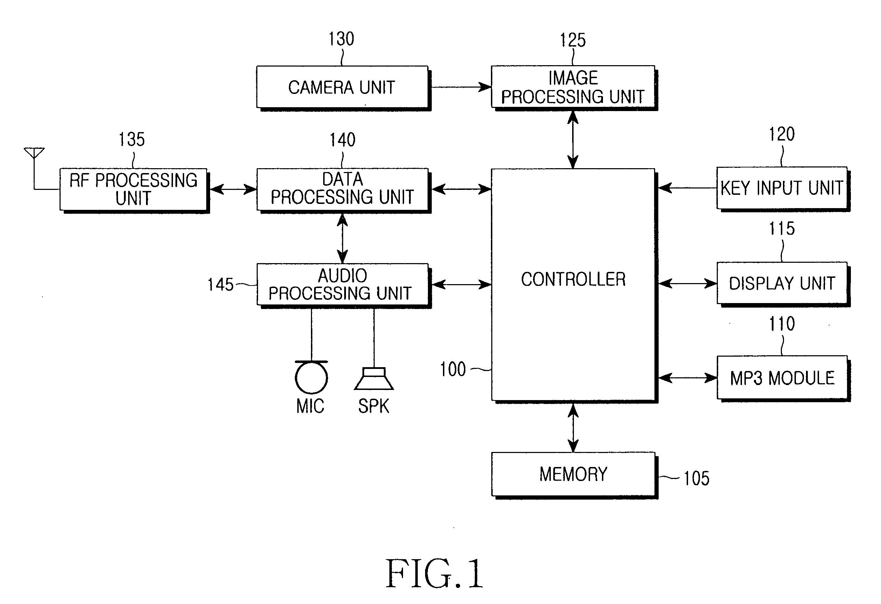

FIG. I is a block diagram illustrating construction of a portable terminal according to an exemplary embodiment of the present invention. In reference to FIG. 1, the controller 100 directs the entire operation of the portable terminal. When sensing the input of a signal for displaying a menu list corresponding to various functions of the portable terminal, the controller 100 directs the menu list to display on display unit 115. While the menu list is displayed, when sensing the input of a key signal for establishing the home screen, the controller 100 receives the selection of a menu item from among the menu list and directs a sub-menu of the selected menu item to be displayed as the home screen.

A memory 105 comprises program memory and data memory. The program memory stores programs for controlling normal operation of the portable terminal; data memory stores various data received from the user or externally supplied. Memory 105 can store data for at least one menu item selected by the user from a menu list corresponding to the various functions of the portable terminal. When a menu item comprising data is established as the home screen, memory 105 outputs the stored home screen data to the controller 100 to enable the controller 100 to display the data on display unit 115. That is, when a message menu item or memo menu item is established as the home screen, memory 105 reads data pre-stored for each menu item to enable the controller 100 to output the read data to the display unit 115.

An MPEG-Audio Layer-3 (MP3) module 110 processes MP3-coded audio file stored in memory 105 by the user, and sends the processed MP3 audio data to the controller 100. Then, the MP3 audio data is output through a speaker or earphone via data processing unit 140 and audio processing unit 145, thereby providing high-quality of music to the user.

The display unit 115 displays processing and operation states as well as a current state based on key input signals received from a key input unit 120. Display unit 115 also displays an image state output from an image processing unit 125, and displays a user interface to indicate the operation of a photography function. Display unit 115 can utilize a liquid crystal display (LCD). When using an LCD display, the display unit 115 can comprise an LCD controller, a memory for storing image data, and an LCD display element. When the LCD employs a touch screen scheme, the key input unit 120 and the LCD can be integrated to form one input unit. The display unit 115 comprises an image data display unit for displaying image data. When the controller 100 senses a predetermined key input signal generated by the user's selection, the display unit 115 displays a menu list corresponding to various functions of the portable terminal based on the generated key input signal. The display unit 115 displays various messages to enable the user to select a menu item from the displayed menu list. When a key signal for executing the home screen establishment function is generated by the user's appropriate selection, and a menu item is established as the home screen, the display unit 115 displays a sub-menu of the established menu item as the home screen.

A key input unit 120 comprises keys for inputting numeric and character information and function keys for setting various functions. The key input unit 120 receives input for displaying a menu list corresponding to various functions of the portable terminal on the display unit 115. In addition, the key input unit 120 receives the selection of a menu item from the displayed menu list and then executes a sub-menu of the selected menu item, and receives a signal for establishing a menu item as the home screen. When a menu item established as the home screen is displayed on the display unit 115, the key input unit 120 is used to receive a signal for executing a sub-menu of the menu item established as the home screen.

A camera unit 130 obtains image data by photographing an image, and comprises a camera sensor, which converts an optical signal obtained by photography into an electric signal. Herein, the camera sensor can comprise a charge-coupled device (CCD) sensor. The image processing unit 125 functions to generate screen data for displaying an image signal. The image processing unit 125 transmits a received image signal according to the size of a display unit 115 under the control of controller 100, and compresses or decompresses the image data. The camera unit 130 and the image processing unit 125 are integrated as a camera module. In addition, the camera unit 130 enables the user to photograph a still image or moving image to be displayed on the wait screen of the portable terminal. A still image or moving image photographed by the camera unit 130 is stored in the memory 105.

A radio frequency (RF) processing unit 135 performs the transmission and reception function of the portable terminal. The RF processing unit 135 comprises an RF transmitter and an RF receiver. The RF transmitter up-converts the frequency of a signal to be transmitted and amplifies the up-converted signal. The RF receiver provides low-noise amplification of a received signal and down-converts the frequency of the received signal. In addition, the RF processing unit 135 functions to receive an image or contents which can be displayed on the wait screen.

A data processing unit (MODEM) 140 comprises a transmitter for encoding and modulating the signal to be transmitted, and a receiver for decoding and demodulating the received signal.

An audio processing unit 145 can be configured with a COder/DECoder (CODEC), which contains a data CODEC for processing packet data and an audio CODEC for processing audio signals, such as voice. The audio processing unit 145 reproduces a digital audio signal received from the data processing unit 140 by converting the digital audio signal into an analog audio signal through the audio CODEC. Also, the audio processing unit 145 converts an analog audio signal for transmission, which has been generated from an audio device such as a microphone, into a digital audio signal through the audio CODEC, and transmits the converted digital audio signal to the data processing unit 140. The CODEC can be either separately constructed or included in the controller 100. In addition, the audio processing unit 145 outputs various alarm sounds or sound effects through a speaker connected to the audio processing unit 145, which are based on home screen establishment information established by the user.

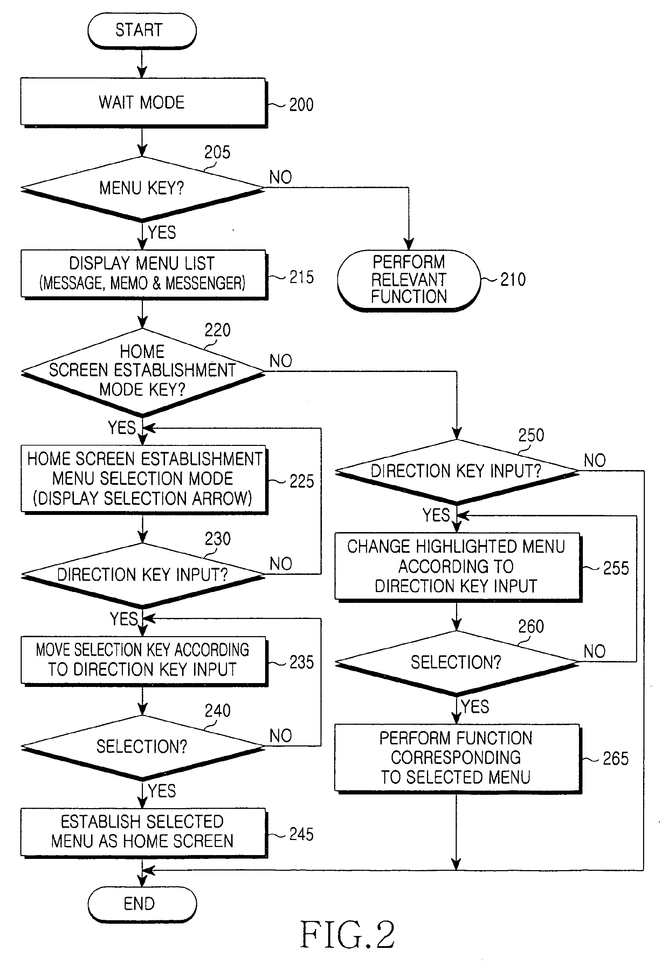

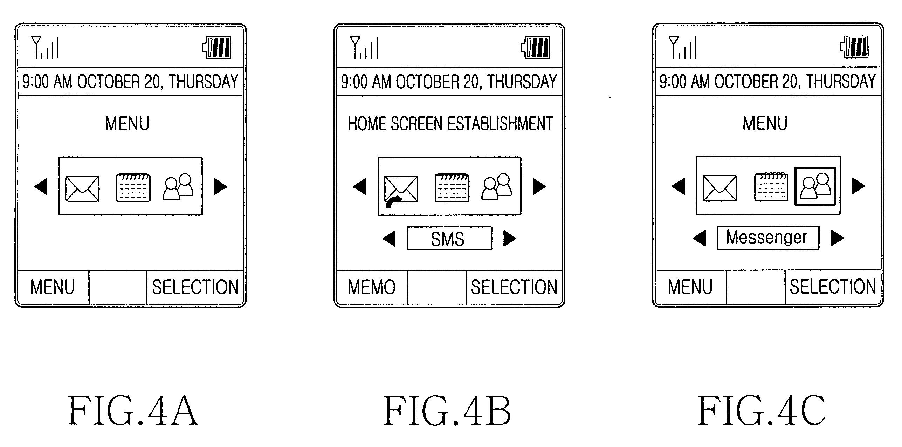

FIG. 2 is a flowchart illustrating a procedure for forming a home screen in a portable terminal according to an exemplary embodiment of the present invention. FIGs. 4A to 4C are views for illustrating screens displayed when a procedure for forming a home screen is performed according to an exemplary embodiment of the present invention. The controller 100 of the portable terminal is in a wait mode in step 200. When sensing a predetermined key input signal while in the wait mode, the controller 100 determines if the input key signal is an input signal of a menu key for checking or establishing various functions of the portable terminal (step 205). When it is determined in step 205 that the input key signal is not an input signal of a menu key, the controller 100 performs a function corresponding to the input key signal in step 210. In contrast, when it is determined in step 205 that the input key signal is the input signal of a menu key, the controller 100 directs the various menu items of the portable terminal based on the input signal of the menu key to be displayed as a screen, as illustrated in FIG. 4A. The screen illustrated in FIG. 4A shows a screen, which displays message, memo, and messenger menu items from among various menu items of the portable terminal.

When a predetermined key input signal is generated in a state during which the menu items are displayed, the controller 100 determines if the generated key input signal is a key signal preset for executing a home screen establishment procedure (step 220). When it is determined in step 220 that the input key signal is a key signal that has been set to receive the selection of a menu item of the displayed menu list and to establish the sub-menu of the selected menu item as a home screen, the controller 100 performs step 225 in which the controller 100 operates in a menu selection mode for home screen establishment. That is, the controller 100 directs a mark for selecting a menu item to be established as a home screen to be displayed in the displayed menu list as a screen, as illustrated in FIG. 4B. In the screen illustrated in FIG. 4B, the mark is expressed as an arrow and the title of the menu item indicated by the arrow is displayed on the screen.

While operating in the home screen establishment mode, when the controller 100 senses an input signal comprising a direction key in step 230, the controller 100 moves the arrow that indicates a menu item along the displayed menu list, based on the sensed direction key (step 235). Thereafter, when sensing the input of a selection key while in a state in which the arrow indicates a menu item through movement of the arrow (step 240), the controller 100 establishes the menu item indicated by the arrow as a home screen in step 245.

In contrast, if it is determined in step 220 that the key signal input, upon display of the menu list in step 215, is not a key signal for executing a home screen establishment mode, the controller 100 performs step 250 in which the controller 100 determines if the input key signal is a direction key signal. When it is determined in step 250 that the input key signal is a direction key signal, the controller 100 highlights a menu item, whose selection is based on the input direction key signal as a screen, as illustrated in FIG. 4C (step 255). The screen illustrated in FIG. 4C shows the case in which the highlighted menu item is a messenger menu item.

While a menu item is highlighted based on the input direction key signal, the controller 100 checks whether the signal of the selection key is input in step 260. When the selection key signal is input in order to select a highlighted menu item, the controller 100 performs the function of the selected menu item in step 265. When a menu is selected in step 260 and is executed in step 265, only the function of the menu is performed, and a home screen establishment function is not performed.

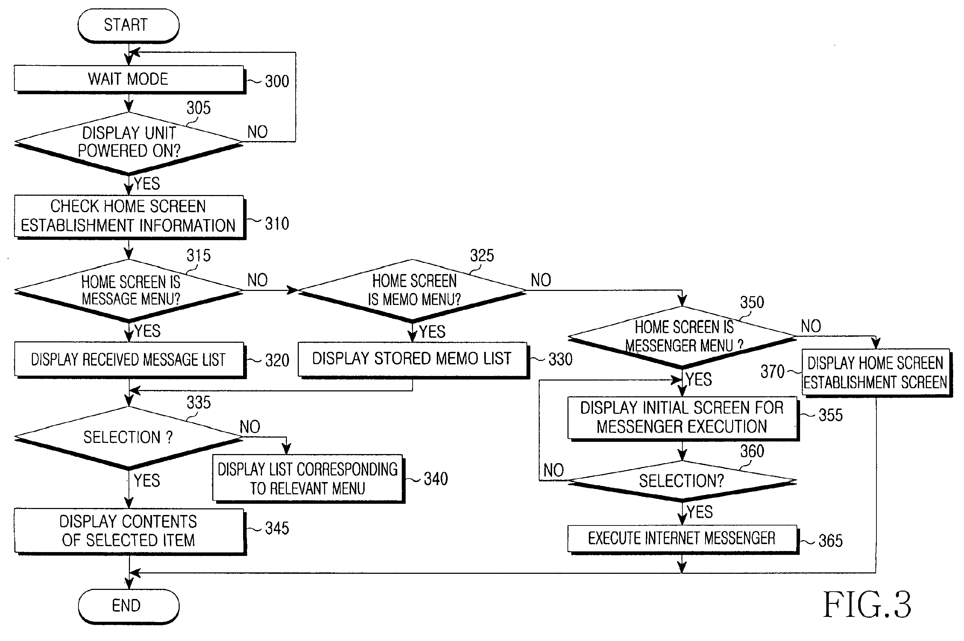

FIG. 3 is a flowchart illustrating a home screen display procedure according to an exemplary embodiment of the present invention. This exemplary embodiment will be described in the context of a case in which at least one of a message, memo, and messenger menu items can be established as the home screen. Also, in this exemplary embodiment, it is assumed that the sub-menu of the message menu comprises a received message list, the sub-menu of the memo menu comprises a stored memo list, and the sub-menu of the messenger menu comprises an initial screen for messenger access. First, the controller 100 operates in a wait mode in step 300. Herein, the wait mode refers to a state in which the display unit 115 is powered off.

In the wait mode, the controller 100 checks whether the display unit 115 is powered on due to the opening of the folder of the portable terminal or a key input signal (step 305). When it is determined in step 305 that the display unit 115 is powered on, the controller 100 checks home screen establishment information, which has been established to display the home screen on the display unit 115 in the wait mode (step 310).

The controller 100 determines if the menu item to be displayed as a home screen is the message menu item, based on the home screen establishment information checked in step 310 (step 315). When it is determined in step 315 that the menu item to be displayed as a home screen is the message menu item, the controller 100 directs the received message list, which is the sub-menu of the message menu, to be displayed (step 320).

When it is determined in step 315 that the menu item established as a home screen is not the message menu item, the controller 100 determines if the menu item established as a home screen is the memo menu item (step 325). When it is determined in step 325 that the menu item established as a home screen is a memo menu item, the controller 100 directs a memo list, which has been input by the user and stored in memory 105 based on the memo menu, to be displayed on the display unit 115 (step 330).

The controller 100 determines if the input of a direction key signal or predetermined key signal, which instruct to select an item from the received message list displayed in step 320 or to select an item from the memo list displayed in step 330, is sensed (step 335). Thereafter, the controller 100 either receives the selection of an item of the displayed list through the input of a direction key and then displays the contents of the selected item (step 345), or displays the list corresponding to the relevant menu item (step 340).

When it is determined in step 325 that the menu item established as a home screen is not a memo menu item, the controller 100 determines if the menu item that has been established to be displayed as a home screen is a messenger menu item (step 350). When it is determined in step 350 that the menu item established to be displayed as a home screen is the messenger menu item, the controller 100 performs step 355 in which the controller 100 displays the initial screen for messenger access as a home screen, which is the sub-menu of the messenger menu. Thereafter, the controller 100 determines if a selection key signal is input by the user in the initial screen for messenger access displayed as a home screen in the wait mode (step 360). Based on a result of the determination in step 360, the controller 100 accesses a wireless Internet to execute Internet messenger (step 365).

When it is determined in step 350 that the menu item established as a home screen is not the messenger menu item, the controller 100 displays the home-screen establishment screen image through default. Although the present invention is described with respect to an example in which a menu list according to home screen establishment is displayed as a wait screen image, an image or calendar established by the user can similarly be displayed as a wait screen image.

While the present invention has been particularly shown and described with reference to certain exemplary embodiments thereof, it will be understood by those of ordinary skill in the art that various changes in form and detail may be made therein without departing from the spirit and scope of the present invention as defined by the appended claims and equivalents thereof. That is, although aspects of the present invention have been described with respect to an example in which a received message list is displayed when a message menu is formed as a wait screen image, any one of various sub-menu items of the message menu as well as the received message list can be displayed based on the establishment of the user, and it can shift into an input mode for a message or memo. Also, aspects of the present invention have been described with respect to an example in which the menu items are limited to the message, memo, and messenger menus, and the sub-menu of a selected menu item is formed as a wait screen image. In addition to the above-described menu items, other menu items, which correspond to various functions of the portable terminal, can be formed as a wait screen image so that the sub-menu of a selected menu item can be displayed as a wait screen image. Accordingly, the scope of the invention should not to be limited by the above exemplary embodiments but, rather, defined by the appended claims and equivalents thereof.

## Claims

1. A method for establishing and displaying a wait screen image in a portable terminal, the method comprising:
displaying at least one menu item corresponding to a function of the portable terminal;
selecting the at least one displayed menu item; and
displaying the wait screen image using the at least one selected menu item and a sub-item of the selected menu item.

2. The method as claimed in claim 1, further comprising:
determining if a signal corresponding to a wait screen image establishment key is input when the at least one menu item is displayed; and
receiving selection of the at least one of displayed menu item when the signal of the wait screen image establishment key is input, and establishing a sub-item of the at least one selected menu item.

3. The method as claimed in claim 1, further comprising:
determining when the at least one selected menu item comprises a message item; and
displaying the wait screen image by using a received message list comprising a sub-menu of the message item, when the at least one selected menu item comprises a message item.

4. The method as claimed in claim 3, further comprising:
operating in a selection mode for selecting at least one sub-menu item from the list corresponding to the sub-menu when a key input signal is sensed while the list is displayed; and
displaying contents corresponding to the selection.

5. The method as claimed in claim 3 further comprising:
displaying a list corresponding to the sub-menu; and
presenting an input mode according to an input of a menu signal when the list corresponding to the sub-menu is displayed.

6. The method as claimed in claim 1, further comprising:
displaying the wait screen image by using a pre-stored memo list, comprising a sub-menu of the memo item when the selected menu item comprises a memo item.

7. The method as claimed in claim 6, further comprising:
presenting an input mode according to an input of a menu signal when a list corresponding to the sub-menu is displayed

8. The method as claimed in claim 2, further comprising:
determining when the selected menu item comprises a messenger item; and
displaying a wait screen image allowing a messenger access when the selected menu item comprises a messenger item.

9. A portable terminal comprising:
a controller for directing operation of the portable terminal;
a memory comprising program memory and data memory for storing programs and data to facilitate the controller in operation of the portable terminal;
a display unit for displaying at least one of a current state, operation, and process of the portable terminal;
a key input unit for inputting at least one of numeric and character data into the portable terminal; and
a data processing unit comprising a transmitter for encoding and modulating a signal to be transmitted and a receiver for demodulating and decoding a signal received,
wherein menu items corresponding to functions of the portable terminal are displayed on the display unit, one of the displayed menu items is selected via the key input, and the wait screen image is displayed on the display unit using at least one of the selected menu item and a sub-item of the selected menu item.
